# FASCICULE DE BREVET EUROPEEN

(11) **EP 1 692 227 B1**
(45) Date de publication et mention de la délivrance du brevet: **21.06.2017**
(21) Numéro de dépôt: 04805617.0
(22) Date de dépôt: 02.12.2004
(51) Int. Cl.: C08L 101/10, C09J 201/10

(54) **COMPOSITION ADHESIVE RETICULABLE A L'HUMIDITE**
FEUCHTIGKEITSVERNETZBARE KLEBSTOFFZUSAMMENSETZUNG
MOISTURE CROSS-LINKABLE ADHESIVE COMPOSITION

(30) Priorité: 11.12.2003 FR 0314507
(43) Date de publication de la demande: 23.08.2006
(73) Titulaire: BOSTIK SA, 93210 La Plaine Saint Denis (FR)
(72) Inventeur: LUCET, Virginie, F-77140 Moncourt Fromonville (FR); CARRARD, Jacqueline, F-77170 Brie Comte Robert (FR); MAYER, André, F-77590 Bois le Roi (FR)
(74) Mandataire: Granet, Pierre
(86) Numéro de dépôt international: PCT/FR2004/003097
(87) Numéro de publication internationale: WO 2005/066283

(56) Documents cités:
- EP-A- 0 732 348
- WO-A-02/072724

## Description

La présente invention concerne une composition réticulable à l'humidité utilisable comme adhésif ou mastic, présentant de grandes facilités d'utilisation et d'excellentes performances de collage.

### Art antérieur

Les performances finales du joint de collage, de même que les caractéristiques de mise en oeuvre de la colle sur les substrats à assembler par collage, sont les facteurs majeurs dans le choix d'une colle.

Les performances finales de la colle sont par exemple ajustées aux sollicitations mécaniques envisagées pour les substrats ou pièces collés. Les caractéristiques de mise en oeuvre d'une colle sont également essentielles pour sa facilité d'utilisation.

Parmi les caractéristiques de mise en oeuvre d'une colle, on peut citer :
- la pégosité (ou tack), qui correspond à la force initiale d'adhésion, après dépose de la colle sur l'un ou les deux substrats à assembler, et mise en contact des deux substrats ;
- le temps ouvert maximum, qui est l'intervalle de temps après lequel une couche d'adhésif appliquée sur un substrat perd sa capacité à fixer par collage ledit substrat à un autre substrat.

Pour un grand nombre d'utilisations, un temps ouvert maximum long, est particulièrement avantageux, par exemple pour des applications manuelles, des collages de grandes pièces ou des pièces compliquées, car il facilite le positionnement des pièces et éventuellement leur repositionnement tout en garantissant également l'optimum des performances adhésives. De manière analogue, une pégosité (ou tack) suffisamment élevée peut souvent éviter le recours à des moyens de serrage auxiliaires.

Une autre caractéristique des colles qui devient de plus en plus importante est l'aspect environnemental. Par exemple, pour les colles dites de contact, on a d'abord utilisé des colles solvantées de composition élastomérique, telles que par exemple les colles néoprène. Les réglementations nationales, européennes et internationales imposent aujourd'hui une réduction des émissions de solvant. De ce fait, la présence de solvants organiques est aujourd'hui un inconvénient majeur. Pour éviter cet inconvénient, il a été proposé des adhésifs thermofusibles dits « hot melt » qui sont efficaces, mais impliquent un chauffage préalable, ce qui présente un désavantage majeur pour leur application. D'autres essais ont été orientés vers les adhésifs en émulsion aqueuse, mais leurs caractéristiques de mise en oeuvre sont médiocres, en particulier l'adhésion est faible, le temps de prise long et, en outre, ils ne sont applicables qu'aux substrats absorbant l'eau.

Des travaux ont alors été conduits pour proposer des colles réactives, sans solvant ni eau à éliminer, réticulant à l'humidité à la température ambiante. Parmi les fonctions réactives utilisées, on a d'abord utilisé les colles à fonctionnalités terminales isocyanates (ou dérivées), mais ces colles contiennent des fractions de monomères plus ou moins nocifs qui en outre peuvent se transformer en amines aromatiques sous l'action de l'humidité. Ces dernières peuvent présenter un caractère toxique dans certains cas.

On a alors ensuite utilisé des polymères à terminaisons réactives silanes dans de nombreuses compositions pour adhésifs ou mastics. Par exemple, la société japonaise Kanegafuchi (souvent dénommée KANEKA) a déposé de nombreux brevets décrivant des polymères de type polyether ou polyester à terminaisons silanes par exemple FR 2 430 439 et EP 0264 072. Des compositions à base de polymères polyuréthane à terminaisons silanes ont également été proposées notamment dans le brevet US 5,298,572 ou le brevet EP 0 549 627. Cependant, les compositions ainsi décrites ne répondent pas correctement aux critères d'utilisation définis ci-dessus.

Plus récemment, le brevet EP 0732 348 a décrit une amélioration des caractéristiques des colles réticulables par l'humidité à température ambiante, par l'addition au polymère réactif à terminaisons silanes de particules d'une poudre amorphe de faible granulométrie, poudre pouvant être constituée de polymères de type acrylate. Ces poudres, insolubles, sont dispersées au sein du polymère réactif. Cependant, la pégosité de ce type de compositions adhésives est faible, et il est nécessaire de laisser les substrats enduits de colles pendant un temps long avant de les mettre en contact.

Le brevet EP1057866 décrit une composition de polymères silanisés pour des adhésifs de contact présentant un temps ouvert maximum long, mais il faut également maintenir un certain temps les supports encollés sans contact afin qu'apparaisse un tack suffisant pour le maintien des supports.

### Problème

Il reste donc encore des améliorations à apporter aux compositions de colles réticulables à l'humidité à température ambiante pour d'une part conférer au joint de collage (obtenu après application des compositions adhésives sur le ou les substrats à assembler et après mise en contact de ces derniers) des performances (notamment des forces finales d'adhésion) qui soient de niveau au moins équivalentes à celles des colles de l'art antérieur, et d'autre part disposer de caractéristiques de mise en oeuvre améliorées.

La demanderesse a trouvé après de nombreuses recherches qu'on pouvait obtenir des compositions d'adhésifs réticulables à l'humidité à température ambiante avec des polymères à terminaison silanes, dont les propriétés d'application sont améliorées par rapport à l'art antérieur.

Les compositions de l'invention permettent d'atteindre des forces finales d'adhésion d'excellent niveau tout en présentant les caractéristiques de mise en oeuvre améliorées suivantes : un tack important facilitant le maintien immédiat des deux supports sans moyen de maintien auxiliaire, et des temps ouverts maximums sensiblement supérieurs à ceux observés dans l'art antérieur.

La présente invention a pour objet une composition adhésive obtenue par mélange de :
- 100 parties en poids d'au moins un polymère organique (A) comportant des fonctions terminales silanes réactives réticulables à l'humidité, et
- 1 à 70 parties en poids d'au moins un polymère organique (B) exempt de fonctions silanes réactives, qui est miscible à température ambiante avec le polymère (A), et choisi parmi les polyesters.

Dans le présent texte, toutes les quantités exprimées sous forme de parties sont des quantités en poids, en l'absence d'indications contraires.

Le polymère organique (A) est généralement choisi parmi les chaînes polymériques suivantes :
- (1) les homopolymères et copolymères obtenus à partir :
   - d'au moins un monomère de type alkyl (méth)acrylate comprenant un radical alkyle ayant un nombre d'atomes de carbone compris entre 1 et 15, de préférence entre 1 et 10 ; et éventuellement
   - d'autres monomères, comme les dérivés styréniques, les éthers vinyliques, les acides (méth)acryliques ou d'autres dérivés polyinsaturés, ces autres monomères pouvant être utilisés jusqu'à des teneurs de 50% en poids par rapport à l'ensemble des monomères. Ces autres monomères sont par exemple tels que ceux décrits dans le brevet US 4,593,068. La masse moléculaire moyenne de ces polymères est par exemple comprise entre 5000 et 100 000 ;
- (2) les polyoxyalkylènes (ou polyéthers) de masses moléculaires comprises entre 500 et 30 000, de préférence entre 3000 et 15 000, et notamment les polyoxyéthylènes et polyoxypropylènes ;
- (3) les polyuréthanes obtenus par condensation d'un polyol (notamment de type polyether et/ou polyester), avec des polyisocyanates. Les masses moléculaires sont généralement comprises entre 1000 et 30 000.

Par polymères à fonctions terminales silanes réactives réticulables à l'humidité, on entend des polymères comportant au moins un groupe silicié hydrolysable, le groupe silicié hydrolysable étant de préférence un groupe silyle de formule:

-Si(Rₐ)X₃₋ₐ

dans laquelle :
- a est un entier de 0 à 2,
- R est un radical monovalent d'hydrocarbure et
- X est un radical hydrolysable.

Des exemples du radical hydrolysable sont le radical hydrure, le radical hydroxy, le radical acyloxy, le radical cétoxime, le radical aminoxy, le radical amide, le radical acide amine, etc., le radical alcoxy étant spécialement préféré.

A titre d'exemple non limitatif de polymères (A) on peut citer :
- les copolymères (méth)acryliques tels que ceux décrits dans les brevets US 4,171,914, US 4,910,255, US 6,441,101, US 6,420,492, EP 1 153 942, et le brevet EP 0199445,
- les poly-ethers tels que ceux décrits dans les demandes de brevet ou brevets U.S. Patents 3,971,751, 3,979,384 , 4,323,488, EP 1038901, JP 2002.56458, US 4,618,656,
- les polyurethanes tels que ceux décrits dans les demandes de brevet ou brevets EP 1178069, US 5,298,572, EP 0714925, EP 0770633, EP 0601021 et WO9533784.

Le polymère organique (B) est miscible à température ambiante dans le polymère (A). Par miscible à température ambiante on entend soit une solubilité de (B) dans (A) à 20 °C immédiate, soit une solubilité obtenue après chauffage et refroidissement du mélange, obtenue par mélange de (B) dans (A), ledit mélange étant chauffé à une température adaptée généralement comprise entre la température ambiante et une température de l'ordre de 90 °C.

La miscibilité du polymère (B) dans le polymère (A) peut être totale ou partielle. Par partielle, on entend qu'il peut exister une teneur maximale de (B) dans (A), teneur pouvant varier suivant la nature chimique et la masse molaire de (B) en liaison avec la nature chimique de (A) et sa propre masse molaire. L'homme de l'art peut très simplement définir cette limite par des essais de mélange de polymère (A) avec différents ajouts de polymère (B) et par suivi de la stabilité des mélanges, par exemple, au moyen du test de miscibilité décrit dans la présente demande.

Parmi les polymères (B) utilisables dans la composition adhésive selon l'invention, sont utilisables plus particulièrement les polyesters à base de polyetherdiol, polyesterdiol, caprolactonediol ou tout autre type de diol ou diacide.

Le polymère (B) peut être amorphe ou cristallin. Il est de préférence au moins partiellement cristallin. Par partiellement cristallin on entend un polymère dont l'enthalpie de fusion, mesurée par Differential Scanning Calorimetry (DSC), entre - 40 et + 100° C, est comprise entre 10 et 150 milliJoules/mg. La cristallinité du polymère (B) peut aussi être observée au microscope polarisant.

Lorsque, conformément à la variante préférée précédente, le polymère (B) est au moins partiellement cristallin, on choisit avantageusement comme température de mélange de (B) dans le polymère (A) une température supérieure de 10 à 20° C à la température de fusion du polymère (B).

Le polymère (B) a généralement une masse moléculaire moyenne comprise entre 500 et 1 000 000, de préférence entre 2000 et 100 000, et de manière plus préférée entre 2500 et 50 000.

La quantité préférée de polymère (B) dans la composition adhésive selon l'invention est comprise entre 3 et 50 parties (pour 100 parties de (A)).

A titre optionnel, la composition comprend une charge minérale telle que celles généralement utilisées dans les adhésifs réactifs sans solvant et réticulant à l'humidité. Cette charge est constituée de particules. A titre d'exemple de telles charges on peut citer la silice pyrogénée, l'oxyde de titane ou les carbonates modifiés. La quantité de charge minérale ajoutée est principalement fonction de l'application finale. Par exemple pour un adhésif classique, elle est généralement comprise entre 0 et 10 parties. Pour un adhésif de type mastic, elle peut être comprise entre 50 et 200 parties.

En outre, on peut ajouter à la composition de l'invention les additifs utilisés de manière habituelle dans ce type de compositions adhésives tels que les catalyseurs de réticulation, les agents plastifiants, les promoteurs d'adhérence ou les stabilisants etc. La quantité d'additifs, hors charges minérales, ajoutés est généralement de quelques parties, par exemple de 1 à 5 parties pour chaque additif.

Les exemples suivants qui illustrent l'invention sont donnés à titre non limitatif.

Dans ces exemples, les caractéristiques de mise en oeuvre des compositions adhésives et les performances finales du joint de collage sont évaluées en mettant en oeuvre une série de tests.

Les performances finales d'adhésion (ou du joint de collage) sont déterminées par des tests de Cisaillement et de Pelage sur différents substrats. Ces tests sont décrits ci-dessous :
- Le Test de cisaillement est conduit selon la norme NF EN 1465 (T 76-107 ) (février 1995 ). La force de rupture est exprimée en daN/cm².
- Le Test de pelage est conduit selon la norme NF EN 28510-2 (sept 1993 ). La force de rupture est exprimée en daN/cm².

L'aspect du joint de collage est également indiqué ci-après sous le terme : "aspect du film".

Les caractéristiques de mise en oeuvre sont déterminées par des tests mesurant le tack (à savoir le test de l' « Effet Ventouse »), le fluage ainsi que le temps ouvert maximum.

### Test de l'Effet Ventouse

On utilise un petit carreau plat en faïence de dimensions en cm 10,5 x 10,5 x 0,7, comportant une attache métallique fixée sur la face poreuse du carreau, l'ensemble correspondant à un poids de 350 g. On utilise également un grand carreau plat en faïence de dimensions en cm 20 x 15 x 0,5.

On dépose sur la face lisse du petit carreau un cordon de colle de diamètre 0,5 cm disposé parallèlement à 3 cm du bord et un second, également disposé parallèlement à 7 cm de ce même bord. Le petit carreau ainsi encollé est immédiatement appliqué sur le grand carreau, les faces lisses étant l'une contre l'autre. L'ensemble est posé sur le plan de travail, le petit carreau étant au-dessus, et est maintenu durant 30 secondes au moyen d'un poids de 2 kg.

L'ensemble est alors soumis à une rotation de 180° et est disposé horizontalement sur un support en contact avec le seul grand carreau, le petit carreau étant ainsi à une hauteur d'environ 20 cm au-dessus du plan de travail, maintenu au grand carreau par les seuls joints de collage.

Toutes les 2 minutes, on ajoute un poids de 200 g à l'attache métallique du petit carreau.

L'effet ventouse représente le maintien immédiat du substrat sous l'effet de la cohésion initiale. Il est évalué par le poids qu'il faut ajouter pour observer la chute du petit carreau, après décollement de ce dernier.

Le résultat est quantifié par une note allant de 1 (mauvais résultat) à 10 (bon résultat).

### Test de fluage

On détermine le glissement de la colle sur une paroi, lisse en verre, disposée soit verticalement soit sous un angle prédéterminé.

On utilise pour cela une grande plaque de verre (40x40 cm) et de petites plaques de verre de 10 g (7,5x7,5x0,1 cm). On recouvre la petite plaque d'un mince film (<0,5 mm) de colle, puis on colle la petite plaque sur la grande plaque disposée à l'horizontale, et l'on applique un poids de 500 g pendant 30 secondes. Ensuite on positionne la grande plaque sous un angle prédéterminé, par exemple 50°, et on contrôle le fluage et le cas échéant son ampleur ce qui permet de coter de 1 à 10 la performance de la colle (correspondant respectivement à un fluage maximal et un fluage minimal).

### Mesure du temps ouvert maximum

On applique simultanément sur 6 plaquettes de verre la colle à l'aide d'une spatule (dépôt d'environ 100 g/m²). Les plaques encollées sont alors appliquées l'une après l'autre sur un support en verre, par intervalle de 5 minutes. L'adhésion des plaquettes sur le support en verre est évaluée manuellement 24 heures après séchage. Le temps ouvert maximum est l'intervalle de temps au-delà duquel il n'y a plus développement d'adhésion.

| | | |
|---|---|---|
| note 10 | temps ouvert maximum | > à 30 minutes |
| note 5 | temps ouvert maximum | de 15 minutes |
| note 1 | temps ouvert maximum | de l'ordre de 5 minutes |

### Test de miscibilité des mélanges

Mettre 100 g de chaque mélange effectué dans un bocal en verre fermé de 150 ml. Laisser reposer 24 heures et noter l'aspect à température de 20°C. Mettre au réfrigérateur pendant une semaine à 5°C. Laisser le bocal pendant 24 heures à 20°C et noter l'aspect. On juge la miscibilité des mélanges par l'apparition de deux phases liquide/ liquide ou liquide/solide caractérisée par une décantation ou une démixtion.

### Test de stabilité des mélanges

Mettre 100 g de chaque formule à tester dans un bocal en verre fermé de 150 ml. Mettre à l'étuve 90°C pendant un mois. Sortir les bocaux et les stabiliser 24 heures à 20°C. La stabilité du mélange est notée 1 en cas de séparation de phase, 5 en cas de légère séparation de phase après un mois et 10 en cas de stabilité après un mois.

### EXEMPLES

Seize compositions adhésives ont été préparées par mélange dans un mélangeur planétaire à partir de divers composants qui peuvent être classés en trois catégories : :
- polymères réactifs comportant des fonctions réticulables à l'humidité ( polymères (A)),
- polymères non réactifs (polymères (B)), et
- charge minérale et/ou additifs.

Ces compositions ont été préparées dans les conditions suivantes : mélange du polymère réactif avec le polymère non réactif et la charge minérale dans un mélangeur de type planétaire Ce mélange est ensuite chauffé à 95 °C et conservé sous vide, à 10 mm de Hg, pendant 2 heures. Après refroidissement à 20 °C, sont ajoutés un composé de type methoxysiloxane (promoteur d'adhérence) et un catalyseur.

Pour la première catégorie - les polymères réactifs - ont été utilisés les polymères suivants :
- un mélange de polyéthers silanisés et de polyacrylates silanisés : MAX 602 produit de la Société Kaneka,
- un polyéther silanisé : SAX 350, SAX 720 produit de la Société Kaneka,
- polyuréthane silanisé : ST 55 produit de la société HANSE Chemie,
- polyuréthane silanisé BOSTIK FINDLEY : polyuréthane sur base d'un polyether de Mw 4.000 ; silanisé .

Pour la deuxième catégorie - polymères non réactifs - ont été utilisés les polymères suivants :
- polyester polycaprolactone : CAPA 6400 de la société SOLVAY , cristallin de masse moléculaire Mn : 37.000,
- polyester cristallin : DYNACOLL 7381 de la société Degussa ; Mw 3.500,
- polyuréthane à base polycarbonate : IROSTIC 7547, de la société SORAC, Mw non donnée par le fournisseur
- polyéthylènediimine amorphe : LUPASOL P, de la société BASF ; Mw 750. 000,
- résine époxy cristalline : EPIkOTE 1001, de la société Shell ; Mw 700-1100,

Pour la troisième catégorie, on a utilisé :
- un diluant réactif : RD 359 de la société KANEKA, mélange de polyéthers silanisés et de polyéthers modifiés,
- une charge minérale de type silice : Aerosil 200,
- un gamma 2 aminoethyl aminopropyl trimethoxysilane :
   Dynasilane 1146 de la société Degussa,
- un catalyseur : dibutyl bis (pentane 2'dionato-O,O)Sn : U220 Neostann de la société Nitto Kasei co ltd.

La teneur précise des composants présents dans chacune de ces compositions est donnée dans le tableau 1 où les quantités sont exprimées en parties poids.

Les caractéristiques de miscibilité et de stabilité de la solution appréciée à la fois en termes d'homogénéité et de couleur, de ces compositions sont données dans le tableau 2 qui comporte également les caractéristiques de mise en oeuvre de ces compositions à savoir le tack initial : effet Ventouse et fluage, le temps ouvert maximum et l'aspect final du film d'adhésif.

Le tableau 3 donne les performances des compositions en matière de force d'adhésion finale appréciée par les tests de cisaillement et de pelage.

**Tableau 1**

| **EXEMPLES** | | | | | **5** | **6** | | | | | **11** | **12** | | | | **16** |
|---|---|---|---|---|---|---|---|---|---|---|---|---|---|---|---|---|
| **EXEMPLES COMPARATIFS** | | | | | | | | | | | | | | | | |
| **COMPOSANTS** | **1** | **2** | **3** | **4** | | | **7** | **8** | **9** | **10** | | | **13** | **14** | **15** | |
| **Polymères réactifs** | | | | | | | | | | | | | | | | |
| polyether silanisé | | | 100 | 100 | | | | | | | | | | | | |
| polyéther/polyacryl silanisé | 100 | 100 | | | 100 | 100 | 100 | 100 | 100 | 100 | 100 | 100 | | | | |
| PUR silanisé | | | | | | | | | | | | | | | 100 | 100 |
| PUR silanisé Bostik Findley | | | | | | | | | | | | | 100 | 100 | | |

| **Polymères non réactifs** | | | | | | | | | | | | | | | | |
|---|---|---|---|---|---|---|---|---|---|---|---|---|---|---|---|---|
| polyester polycaprolactone MM>37000 | | | | | 10 | | | | | | 1 | 50 | | | | 10 |
| polyester MM >3500 | | | | | | 10 | | | | | | | | | | |
| PU base polycarbonate MM>750000 | | | | | | | | 11 | | | | | | | | |
| polyéthylènediimine amorphe MM > 10000 | | | | | | | | | 10 | | | | | | | |
| résine cristalline époxy 700-1100 | | | | | | | | | 0 | 10 | | | | | | |

| **Additifs** | | | | | | | | | | | | | | | | |
|---|---|---|---|---|---|---|---|---|---|---|---|---|---|---|---|---|
| charge minérale titane | | | | | | | | | | | 200 | | | | | |
| charge minérale silice | 10 | 5 | 10 | 10 | 5 | 5 | 5 | 5 | 5 | 5 | | 1 | 7 | 7 | 5 | 5 |
| plastifiant | 20 | | | | | | | | | | | | | | | |
| diluant réactif | | 5 | | | 5 | 5 | 5 | 3 | 5 | 5 | 20 | 10 | 3 | 3 | 5 | 6 |
| Dynasilane1146 | 4 | 4 | 2,8 | 2,8 | 4 | 3,8 | 3,8 | 3 | 4 | 4 | 3 | 3 | 3,5 | 3,5 | 4 | 4 |
| dibutylbis (pentane 2' dionato-0, 0) tin | 1.5 | 1,4 | 1,6 | 1,6 | 1,4 | 1,5 | 1,5 | 1,5 | 1,5 | 1,5 | 1,5 | 1,5 | 0,75 | 0,2 | 1,5 | 1,5 |

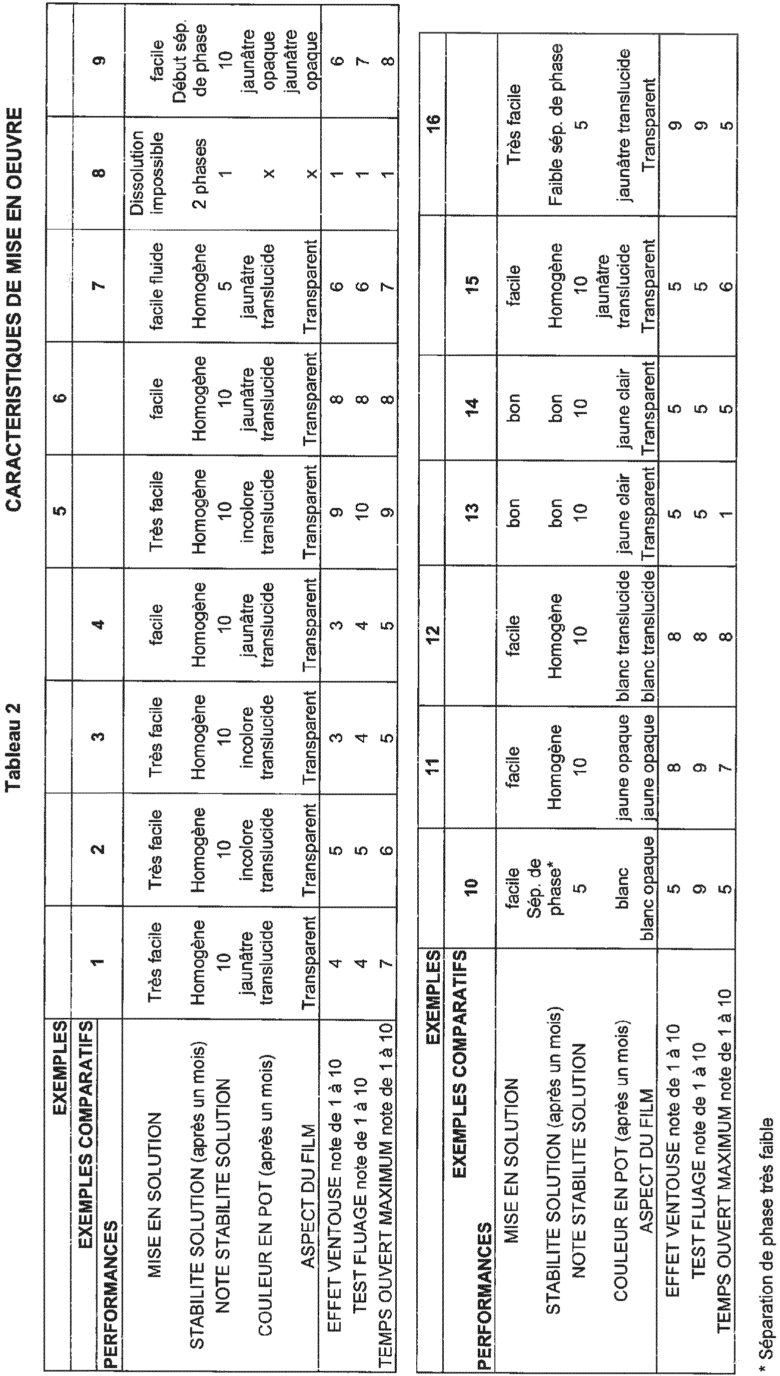

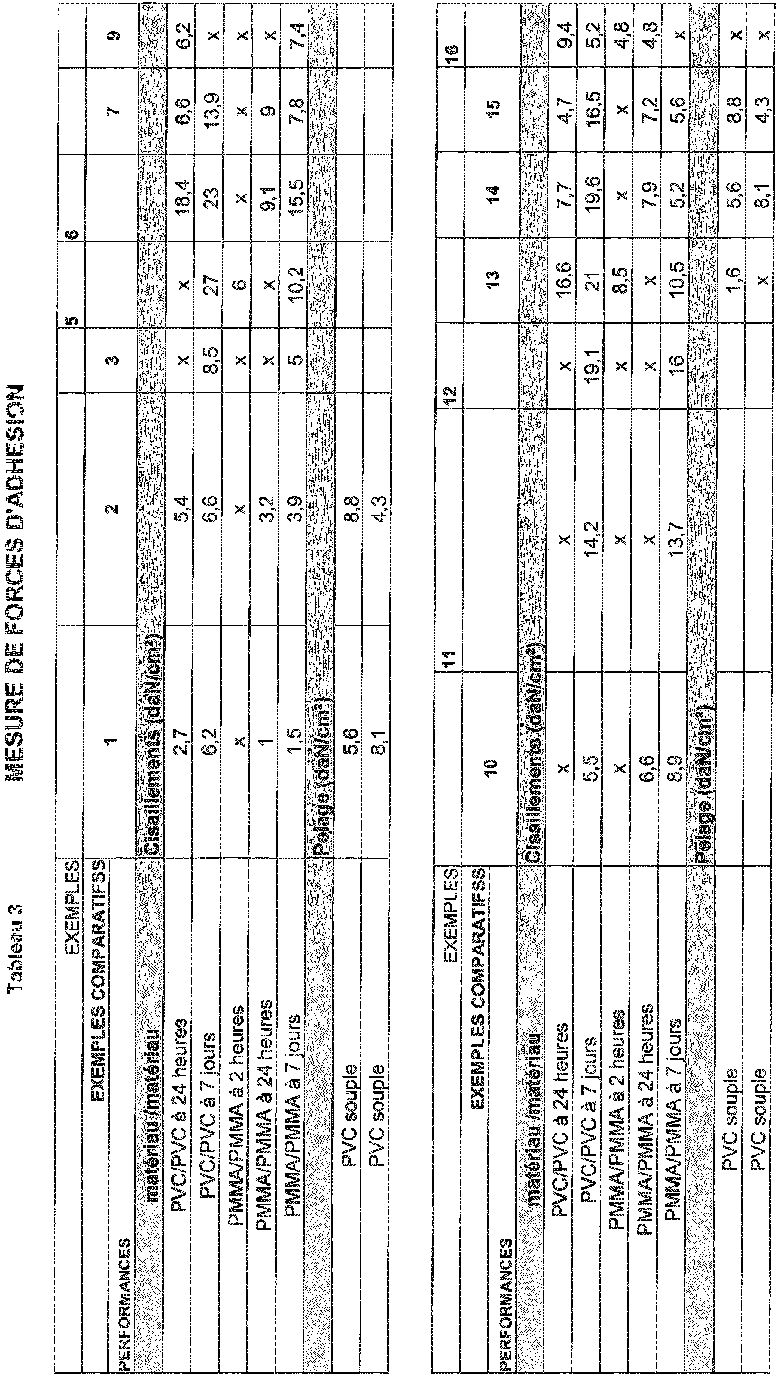

## Revendications

1. Composition adhésive obtenue par mélange de :
- 100 parties en poids d'au moins un polymère organique (A) comportant des fonctions terminales silanes réactives réticulables à l'humidité, et
- 1 à 70 parties en poids d'au moins un polymère organique (B) exempt de fonctions silanes réactives, qui est miscible à température ambiante avec le polymère (A), et choisi parmi les polyesters.

2. Composition adhésive selon la revendication 1, **caractérisée en ce que** le polymère organique (A) est choisi parmi les chaînes polymériques suivantes :
- (1) les homopolymères et copolymères obtenus à partir d'au moins un monomère de type alkyl (méth)acrylate comprenant un radical alkyle ayant un nombre d'atomes de carbone compris entre 1 et 15, de préférence entre 1 et 10 ;
- (2) les polyoxyalkylènes de masses moléculaires comprises entre 500 et 30 000, de préférence entre 3000 et 15 000 ;
- (3) les polyuréthanes obtenus par condensation d'un polyol, de préférence de type polyether et/ou polyester, avec des polyisocyanates.

3. Composition adhésive selon la revendication 2, **caractérisée en ce que** les copolymères (1) sont obtenus par copolymérisation avec d'autres monomères, comme les dérivés styréniques, les éthers vinyliques, les acides (méth)acryliques, pouvant être utilisés jusqu'à des teneurs de 50% en poids par rapport à l'ensemble des monomères.

4. Composition adhésive selon la revendication 2, **caractérisée en ce que** les les polyoxyalkylènes (2) sont des polyoxyéthylènes ou des polyoxypropylènes.

5. Composition adhésive selon l'une des revendications 1 à 4, **caractérisée en ce que** le polymère organique (A) comporte au moins un groupe silicié hydrolysable.

6. Composition adhésive selon la revendication 5, **caractérisée en ce que** le groupe silicié hydrolysable est un groupe silyle de formule :
-Si(Rₐ)X₃₋ₐ
dans laquelle :
- a est un entier de 0 à 2,
- R est un radical monovalent d'hydrocarbure et
- X est un radical hydrolysable.

7. Composition adhésive selon l'une des revendications 1 à 6, **caractérisée en ce que** le polymère (B) est au moins partiellement cristallin.

8. Composition adhésive selon l'une des revendications 1 à 7, **caractérisée en ce que** le polymère (B) a une masse moléculaire moyenne comprise entre 500 et 1 000 000, de préférence entre 2000 et 100 000, et de manière plus préférée entre 2500 et 50 000.

9. Composition adhésive selon l'une des revendications 1 à 8, **caractérisée en ce que** la quantité de polymère (B) est comprise entre 3 et 50 parties pour 100 parties de (A).

## Patentansprüche

1. Klebstoffzusammensetzung, erhalten durch Mischen von:
- 100 Gewichtsteilen mindestens eines organischen Polymers (A) mit endständigen feuchtigkeitsvernetzbaren reaktiven Silanfunktionen und
- 1 bis 70 Gewichtsteilen mindestens eines organischen Polymers (B) ohne reaktive Silanfunktionen, das bei Umgebungstemperatur mit dem Polymer (A) mischbar ist und aus Polyestern ausgewählt ist.

2. Klebstoffzusammensetzung nach Anspruch 1, **dadurch gekennzeichnet, dass** das organische Polymer (A) aus den folgenden Polymerketten ausgewählt ist:
- (1) Homopolymeren und Copolymeren, erhalten aus mindestens einem Monomer vom Alkyl(meth)acrylat-Typ mit einem Alkylrest mit einer Zahl von Kohlenstoffatomen zwischen 1 und 15 und vorzugsweise zwischen 1 und 10;
- (2) Polyoxyalkylenen mit Molmassen zwischen 500 und 30.000 und vorzugsweise zwischen 3000 und 15.000;
- (3) Polyurethanen, erhalten durch Kondensation eines Polyols, vorzugsweise vom Polyether- und/oder Polyester-Typ, mit Polyisocyanaten.

3. Klebstoffzusammensetzung nach Anspruch 2, **dadurch gekennzeichnet, dass** die Copolymere (1) durch Copolymerisation mit anderen Monomeren, wie Styrolderivaten, Vinylethern, (Meth)acrylsäuren, die in Gehalten bis zu 50 Gew.-%, bezogen auf die Gesamtheit der Monomere, verwendet werden können, erhalten werden.

4. Klebstoffzusammensetzung nach Anspruch 2, **dadurch gekennzeichnet, dass** es sich bei den Polyoxyalkylenen (2) um Polyoxyethylene oder Polyoxypropylene handelt.

5. Klebstoffzusammensetzung nach einem der Ansprüche 1 bis 4, **dadurch gekennzeichnet, dass** das organische Polymer (A) mindestens eine hydrolysierbare siliciumhaltige Gruppe umfasst.

6. Klebstoffzusammensetzung nach Anspruch 5, **dadurch gekennzeichnet, dass** es sich bei der hydrolysierbaren siliciumhaltigen Gruppe um eine Silylgruppe der Formel:
-Si(Rₐ)X₃₋ₐ
handelt, wobei:
- a für eine ganze Zahl von 0 bis 2 steht,
- R für einen einwertigen Kohlenwasserstoffrest steht und
- X für einen hydrolysierbaren Rest steht.

7. Klebstoffzusammensetzung nach einem der Ansprüche 1 bis 6, **dadurch gekennzeichnet, dass** das Polymer (B) zumindest teilweise kristallin ist.

8. Klebstoffzusammensetzung nach einem der Ansprüche 1 bis 7, **dadurch gekennzeichnet, dass** das Polymer (B) eine mittlere Molmasse zwischen 500 und 1.000.000, vorzugsweise zwischen 2000 und 100.000 und noch weiter bevorzugt zwischen 2500 und 50.000 aufweist.

9. Klebstoffzusammensetzung nach einem der Ansprüche 1 bis 8, **dadurch gekennzeichnet, dass** die Menge an Polymer (B) zwischen 3 und 50 Teilen auf 100 Teile (A) liegt.

## Claims

1. Adhesive composition obtained by mixing:
- 100 parts by weight of at least one organic polymer (A) having moisture cross-linkable reactive silane terminal functions, and
- 1 to 70 parts by weight of at least one organic polymer (B) comprising no reactive silane functions which is miscible at ambient temperature with polymer (A), and is selected from among polyesters.

2. Adhesive composition according to Claim 1, **characterized in that** the organic polymer (A) is selected from among the following polymer chains:
- (1) homopolymers and copolymers obtained from at least one monomer of the alkyl (meth)acrylate type comprising an alkyl radical having between 1 and 15, preferably between 1 and 10, carbon atoms;
- (2) polyoxyalkylenes of molecular masses of between 500 and 30,000, preferably between 3000 and 15,000;
- (3) polyurethanes obtained by condensation of a polyol, preferably of the polyether and/or polyester type, with polyisocyanates.

3. Adhesive composition according to Claim 2, **characterized in that** the copolymers (1) are obtained by copolymerization with other monomers, such as styrene derivatives, vinyl ethers, (meth)acrylic acids, which may be used in contents of up to 50% by weight relative to the combined total of the monomers.

4. Adhesive composition according to Claim 2, **characterized in that** the polyoxyalkylenes (2) are polyoxyethylenes or polyoxypropylenes.

5. Adhesive composition according to one of Claims 1 to 4, **characterized in that** the organic polymer (A) comprises at least one hydrolyzable silicon-containing group.

6. Adhesive composition according to Claim 5, **characterized in that** the hydrolyzable silicon-containing group is a silyl group of the formula:
-Si(Rₐ)X₃₋ₐ
in which:
- a is an integer from 0 to 2,
- R is a monovalent hydrocarbon radical and
- X is a hydrolyzable radical.

7. Adhesive composition according to one of Claims 1 to 6, **characterized in that** the polymer (B) is at least partially crystalline.

8. Adhesive composition according to one of Claims 1 to 7, **characterized in that** the polymer (B) has a mean molecular mass of between 500 and 1,000,000, preferably between 2000 and 100,000, and more preferably between 2500 and 50,000.

9. Adhesive composition according to one of Claims 1 to 8, **characterized in that** the quantity of polymer (B) is between 3 and 50 parts per 100 parts of (A).
